# EUROPEAN PATENT APPLICATION

(11) **EP 1 752 879 A1**
(43) Date of publication of application: **14.02.2007**
(21) Application number: 05721127.8
(22) Date of filing: 18.03.2005
(51) Int. Cl.: G06F 12/14, G06F 12/00

(54) **FILE MANAGEMENT DEVICE, FILE MANAGEMENT METHOD, FILE MANAGEMENT PROGRAM, AND COMPUTER-READABLE RECORDING MEDIUM CONTAINING THE FILE MANAGEMENT PROGRAM**

(30) Priority: 13.05.2004 JP 2004143474
(71) Applicant: MATSUSHITA ELECTRIC INDUSTRIAL CO., LTD., Osaka 571-8501 (JP)
(72) Inventor: KATO, Yuichi c/o MATSUSHITA EL. IND. CO., LTD., 1-3-7 Shiromi Chuo-ku, Osaka 540-6319 (JP); KUMAZAKI, Tsutomu c/o MATSUSHITA EL. IND. CO. LTD., 1-3-7 Shiromi Chuo-ku, Osaka 540-6319 (JP); YAMASHITA, Kazuhiko c/o MATSUSHITA EL. IN.CO.LTD., 1-3-7 Shiromi Chuo-ku, Osaka 540-6319 (JP)
(74) Representative: TBK-Patent
(86) International application number: PCT/JP2005/004940
(87) International publication number: WO 2005/111809

(57) **Abstract**

A file management apparatus, a file management method, a file management program, and a computer-readable recording medium in which a file management program is recorded, are provided which are capable of certainly detecting an alteration to a volume.

An HDD 130 stores a file, and stores volume management data 152 for managing a volume which includes the file; a copyright-data creation section 205 creates volume copyright data 134 for detecting an alteration to the volume management data 152 when the file is written; a flash RAM 132 which is disposed in a position physically different from the HDD 130 stores the volume copyright data 134; a copyright-data comparison section 206 compares the volume management data 152 and the volume copyright data 134 when the volume is mounted; and a control section 202 mounts the volume if a decision is made that there is no alteration.

## Description

### Technical Field

The present invention relates to a file management apparatus which is capable of storing information in a file unit more efficiently and securely in an information storage apparatus or the like that stores information, using a physical means such as magnetic, optical and electrical, a chemical means, or a combination of these. For the same purpose, it also relates to, a file management method, a file management program, and a computer-readable recording medium in which a file management program is recorded.

Furthermore, it relates to a file management system or the like which is capable of detecting the fact that such information is falsified. This information to be falsified which can be detected also includes, for example, copyright information for managing a copy, and the like.

Moreover, in order to more certainly manage such information or detect the fact that it is dishonestly altered, it relates to a file management system or the like which is capable of securely managing information or detecting an alteration, for example, even if the power is turned off while file information is being updated or at another such time.

### Background Art

Conventionally, as an example of a file management apparatus, a file management method, a file management program and a computer-readable recording medium in which a file management program is recorded, for example, a recording-and-regeneration apparatus is described in the following Patent Document 1.

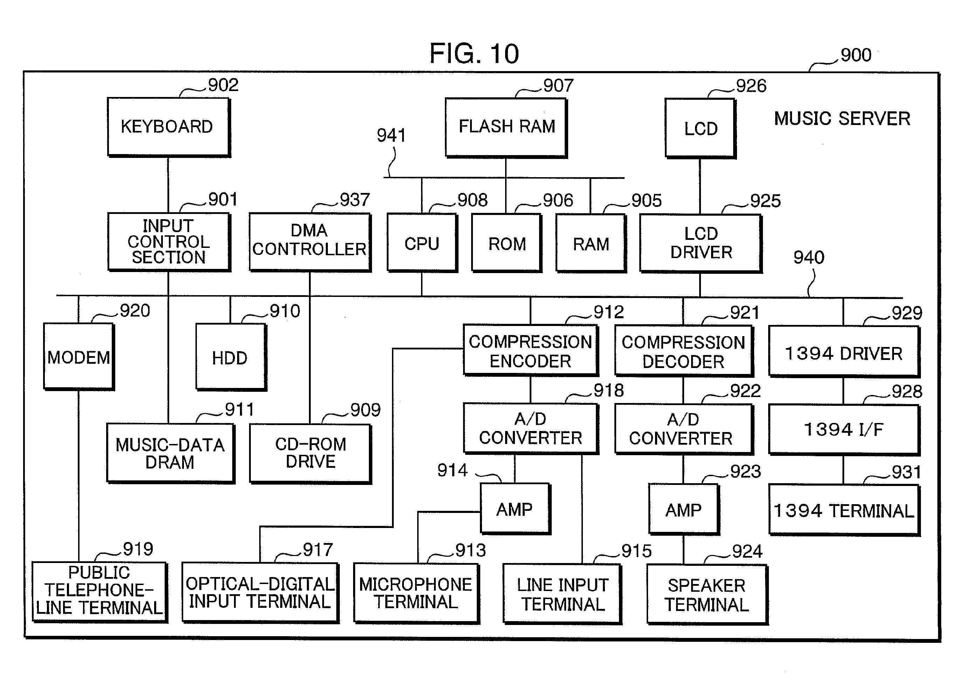

Fig. 10 is a block diagram, schematically showing the configuration of a music server 900 which is an example of the conventional recording-and-regeneration apparatus.

In this music server 900, music data is recorded in an HDD 910, a CD-ROM drive 909, or a music-data DRAM 911. The HDD 910 is used for reading and writing, and the CD-ROM drive 909 is for reading only. The music-data DRAM 911 is used for reading and writing, but usually for temporary recording.

A user uses a keyboard 902 to operate the music server 900. Its operation information is sent from an input control section 901 through a bus 940 to a CPU 908. Based on this operation information or another piece of information, the CPU 908 controls the entire music server 900. In order to execute this control, the CPU 908 uses a ROM 906, a RAM 905, a flash RAM 907, and some other elements (not shown).

The CPU 908, the ROM 906, the RAM 905 and the flash RAM 907 are connected through a bus 941. The ROM 906 stores a program for controlling the CPU 908, or data which is not supposed to undergo any change. The RAM 905 stores temporary data. The flash RAM 907 stores data which can also be changed but should be kept stored even if the power is turned off, for example, data such as a parameter (described later). The operation information, or the state of the music server 900 which is controlled by the CPU 908, is displayed via an LCD driver 925 in an LCD 926.

The music server 900 is connected to external equipment or a network, via a modem 920 and a public telephone-line terminal 919, or via a 1394 driver 929, a 1394-I/F 928 and a 1394 terminal 931, using an interface which has a fixed specification, respectively. If it is connected in such a way, the music server 900 can acquire various kinds of information, including music data or its relevant data, from the external equipment or the network. Or, conversely, it can send out various kinds of information.

The music server 900 includes, as a dedicated interface for inputting and outputting music data: an optical-digital input terminal 917; a microphone terminal 913; a line input terminal 915; and a speaker terminal 924.

The music data which is inputted from the optical-digital input terminal 917 is recorded via a compression encoder 912 in the music-data DRAM 911 or the HDD 910. The music data which is inputted from the line input terminal 915 is converted from analog data into digital data by an A/D converter 918. Then, it is recorded via the compression encoder 912 in the music-data DRAM 911 or the HDD 910. The music data which is inputted from the microphone terminal 913 is amplified by an AMP (or amplifier) 914. Then, it is converted from analog data into digital data by the A/D converter 918 and is recorded via the compression encoder 912 in the music-data DRAM 911 or the HDD 910.

In addition, the music data which is recorded in the music-data DRAM 911 or the HDD 910 is decoded by a compression decoder 921. Then, it is converted from digital data into analog data by a D/A converter 922, is amplified by an AMP 923 and is outputted from the speaker terminal 924.

Herein, such a configuration of the music server 900 is simply an example. It is not necessarily limited to only this configuration, but another configuration is omitted.

In this music server 900, for example, when music data which is inputted from an external section such as the microphone terminal 913 is transferred to the HDD 910, data to be recorded is once stored in the DRAM 911. Then, it is read in each fixed unit (i.e., block) from the DRAM 911, and this data in fixed blocks is recorded in the HDD 910. Besides, Furthermore, when data is regenerated from the HDD 910, the data which is regenerated from the HDD 910 is once stored in the DRAM 911. Then, it is read in each set unit (i.e., block) from the DRAM 911, and this data is outputted, for example, to the speaker terminal 924. The transfer of data is executed by the DMA (or direct memory access) control of a DMA controller 937.

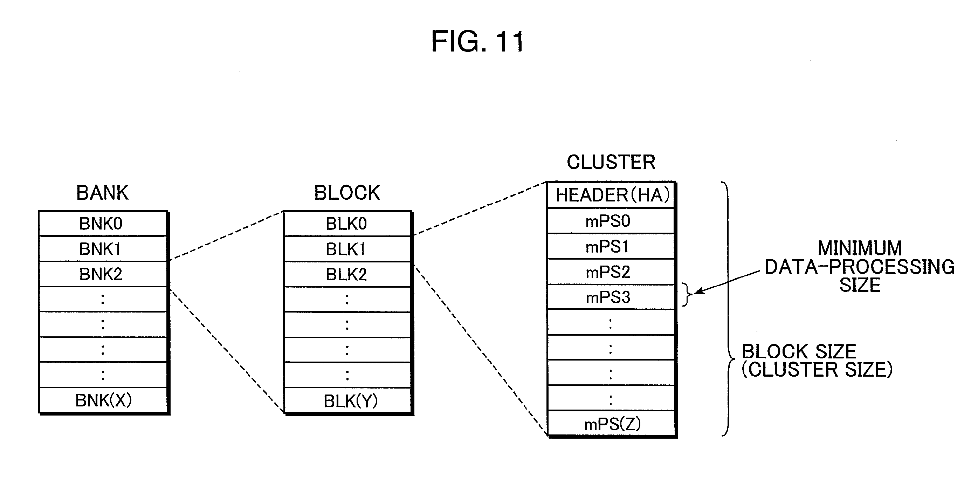

The DRAM 911 is divided, as shown in Fig. 11, into several banks, for example, BNK0, BNK1, BNK2 ···. Each bank BNK0, BNK1, BNK2 ··· is divided, as shown in Fig. 11, into several blocks, for example, BLK0, BLK1, BLK2 ···. The size of each block BLK0, BLK1, BLK2 ··· corresponds to the size of a cluster.

In this way, when music data from an external section is transferred in each certain unit to the HDD 910, the order of a data transfer is changed, or an offset is changed. Thereby, its arrangement is changed, so that a scramble can be executed.

For example, let's assume a parameter for an arrangement change in each block is a3, and that this parameter a3 is converted into b3, using an inherent map f3 in each piece of equipment. This parameter b3 which is obtained in the conversion is stored in the flash RAM 907. Hence, the order of the data blocks which are recorded in the disk inside of the HDD 910 is changed according to the parameter a3. Therefore, the data cannot be properly transferred, unless the equipment is the same as the equipment at the time of recording.

However, in such a conventional file management system, a file management method, or the like, in order to execute copy management such as copyright management, a file which includes data for detecting an alteration is separately created, apart from a file to be managed. Then, the consistency of such data is managed by an application.

Therefore, the processing sequence of an application becomes complicated, thus increasing a man-hour required to develop an application. Besides, a processing sequence for copyright management needs to be prepared for each application.

Furthermore, a file which should be managed and a data file for detecting an alteration which corresponds to this file managed are each managed as a separate file in a file system. Therefore, when an abnormal operation is produced, such as turning off the power during file access, the matching may be broken between the file which should be managed and the data file for detecting an alteration which corresponds to this file managed. Thus, a decision can be made that normal data is altered, or that altered data is normal data.

Still further, in such a conventional file management system, a file management method, or the like, as given in the above described example, in order to protect data in a file, a data arrangement order is changed. This presents a disadvantage in that the contents of data is kept intact in an individual block, so that seeking for a disk head may increase and the access speed of a recording apparatus can lower. Patent Document 1: Japanese Patent Laid-Open No. 2001-118328 specification

### Disclosure of the Invention

In order to resolve the above described disadvantages, it is an object of the present invention to provide a file management apparatus, a file management method, a file management program, and a computer-readable recording medium in which a file management program is recorded, which are capable of certainly detecting an alteration to a volume.

A file management apparatus according to the present invention includes: a first storing means for storing a file, and storing volume management data for managing a volume which includes the file; a data creating means for creating volume-alteration detection data for detecting an alteration to the volume management data when the file is written; a second storing means for storing the volume-alteration detection data which is created by the data creating means, the second storing means being disposed in a position physically different from the first storing means; a data comparing means for reading the volume management data from the first storing means when the volume is mounted, reading the volume-alteration detection data from the second storing means, and comparing the volume management data and the volume-alteration detection data; and a mounting means for mounting the volume if the data comparing means decides that there is no alteration.

According to this configuration, in the first storing means, a file is stored, and volume management data for managing a volume which includes the file is stored. Then, the data creating means creates volume-alteration detection data for detecting an alteration to the volume management data when the file is written. In the second storing means which is disposed in a position physically different from the first storing means, there is stored the volume-alteration detection data which is created by the data creating means. Then, the data comparing means reads the volume management data from the first storing means when the volume is mounted, reads the volume-alteration detection data from the second storing means, and compares the volume management data and the volume-alteration detection data. If the data comparing means decides that there is no alteration, the mounting means mounts the volume.

Therefore, using the volume-alteration detection data which is stored in the second storing means which is disposed in a position physically different from the first storing means, a decision is made whether or not the volume has been altered. Thereby, an alteration to the volume can be certainly detected, thus preventing the volume from being falsified.

The objects, characteristics and advantages of the present invention will be more obvious in the following detailed description and attached drawings.

### Brief Description of the Drawings

Fig. 1 is a block diagram, schematically showing the configuration of hardware and software of a file management system according to an embodiment of the present invention.
Fig. 2 is a block diagram, showing an example of the configuration of a file management system according to the present invention, and its function.
Fig. 3 is a block diagram, showing an example of the file configuration of the file management system according to the embodiment of the present invention.
Fig. 4 is a flow chart, showing a file creation processing which is executed when a file is created.
Fig. 5 is tables, showing an example of file management data in the file management system according to the embodiment of the present invention.
Fig. 6 is a flow chart, showing an alteration detection processing which is executed when a volume is mounted.
Fig. 7 is a flow chart, showing an alteration detection processing which is executed when a file is opened.
Fig. 8 is tables, showing an example of the update of file management data in the file management system according to the embodiment of the present invention.
Fig. 9 is a flow chart, showing a file update processing at the time when a file is updated.
Fig. 10 is a block diagram, schematically showing the configuration of a music server which is an example of a conventional recording-and-regeneration apparatus.
Fig. 11 is a representation, showing the configuration of a storage area in the music server which is the example of the conventional recording-and-regeneration apparatus.

### Best Mode for Implementing the Invention

Hereinafter, a file management apparatus according to an embodiment of the present invention will be described with reference to the drawings.

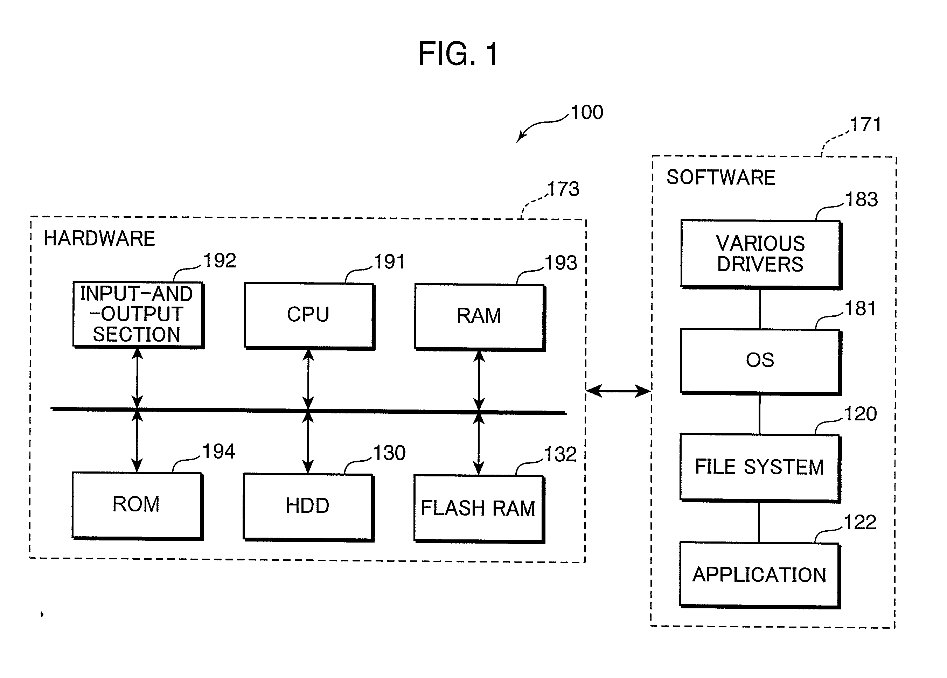

Fig. 1 is a block diagram, schematically showing the configuration of hardware 173 and software 171 of a file management system 100 according to the embodiment of the present invention. Herein, in Fig. 1, hardware and software are separately shown for convenience of explanation. However, the software 171 shown in Fig. 1 is stored in a ROM 194 of the hardware 173. Hence, a CPU 191 executes these pieces of software 171.

The hardware 173 is made up of: an input-and-output section 192; the CPU (or central processing unit) 191; a RAM (or random access memory) 193; the ROM (or read only memory) 194; a HDD (or hard disk drive) 130; a flash RAM 132; and several other elements (not shown). Herein, this hardware 173 is the same as a personal computer (or PC) which is widely used, and thus, its further detailed description is omitted. In addition, the present invention can be applied to, not only a personal computer, but also a recording-and-regeneration apparatus (e.g., a so-called DVD recorder) which records and/or regenerates information in an optical disk such as a CD and a DVD, a cellular phone, and the like.

The software 171 is made up of: various drivers 183 for controlling various component elements of the hardware 173, or inputting and outputting data; an operating system (or OS) 181; a file system 120; an application 122; and some other software elements (not shown).

The file management system 100 according to this embodiment is characterized by the file system 120. The various drivers 183, the OS 181 and the application 122 are similar to the ones which are generally used. Hence, a detailed description will be given below mainly about the file system 120, and thus, only the minimum essentials will be only described of the other elements. Besides, the fact that the application 122 is the same as the one which is commonly used is also one characteristic of the present invention, but this will be described separately.

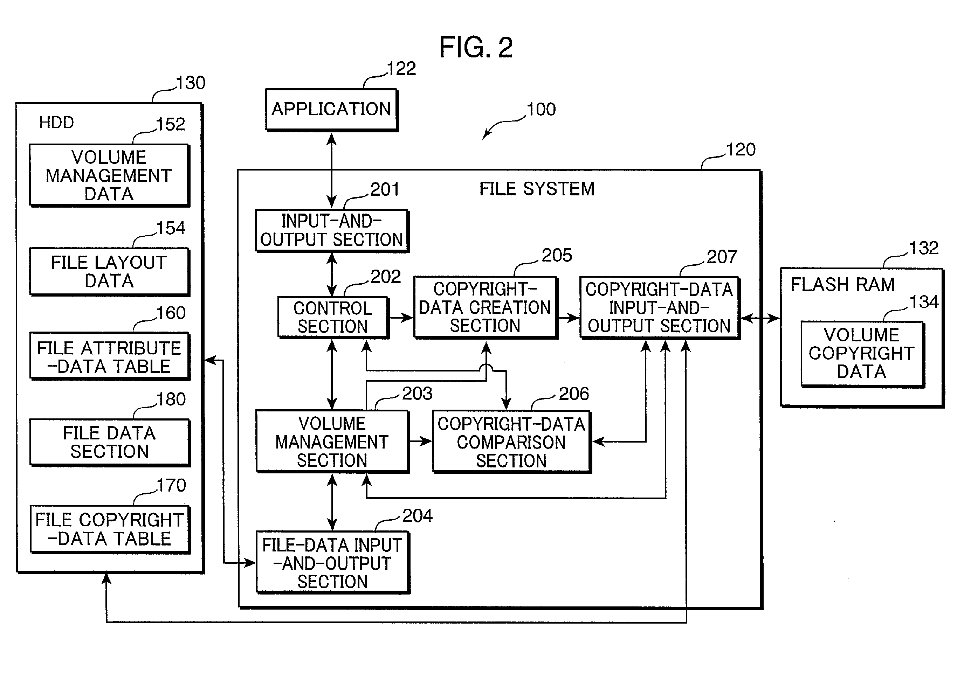

Fig. 2 is a block diagram, showing an example of the configuration of a file management system according to the present invention, and its function. The file management system 100 shown in Fig. 2 is configured by: the file system 120; the application 122; the HDD 130; and the flash RAM 132.

The CPU 191 shown in Fig. 1 executes the file system 120, so that the file system 120 functions as: an input-and-output section 201; a control section 202; a volume management section 203; a file-data input-and-output section 204; a copyright-data creation section 205; a copyright-data comparison section 206; and a copyright-data input-and-output section 207.

The HDD 130 stores: volume management data 152; file layout data 154; a file attribute-data table 160; a file data section 180; and a file copyright-data table 170. The flash RAM 132 stores volume copyright data 134. Herein, the volume management data 152, the file layout data 154, the file attribute-data table 160, the file data section 180, the file copyright-data table 170 and the volume copyright data 134 will be described later.

Herein, the volume according to this embodiment is a logical volume which represents the storage area of the HDD 130. However, the present invention is not limited especially to this. The volume may also be a physical volume which represents the HDD 130 itself. Besides, if the HDD 130 is formed by a plurality of volumes, the HDD 130 may also store volume management data in each volume.

The input-and-output section 201 outputs , to the control section 202, various requests which are inputted from the application 122. Then, it outputs, to the application 122, a response which is inputted from the control section 202. The control section 202 issues an instruction to the volume management section 203, the copyright-data creation section 205 and the copyright-data comparison section 206. Thereby, it controls the whole file system.

The volume management section 203 is related to the file system, and manages the volume management data 152, the file layout data 154, the file attribute-data table 160 and the file data section 180 which are stored in the HDD 130. The file-data input-and-output section 204 reads and writes various kinds of data from and into the HDD 130, according to an instruction from the volume management section 203.

The copyright-data creation section 205 creates the volume copyright data 134 and the file copyright-data table 170, based on an instruction from the control section 202 and file data which is received from the volume management section 203.

The copyright-data input-and-output section 207 writes, in the flash RAM 132, the volume copyright data 134 which is created by the copyright-data creation section 205. Then, it reads the volume copyright data 134 which is stored in the flash RAM 132. Besides, the copyright-data input-and-output section 207 writes, in the HDD 130, the file copyright-data table 170 which is created by the copyright-data creation section 205. Then, it reads the file copyright-data table 170 which is stored in the HDD 130.

The copyright-data comparison section 206 compares the volume management data 152 which is received from the volume management section 203 and the volume copyright data 134 which is received from the copyright-data input-and-output section 207. Then, it checks whether no alteration is made. In addition, the copyright-data comparison section 206 compares the file data which is received from the volume management section 203 and the file copyright data which is received from the copyright-data input-and-output section 207. Then, it checks whether no alteration is made.

Herein, in this embodiment, the file management system 100 corresponds to an example of the file management apparatus; the HDD 130, an example of the first storing means; the copyright-data creation section 205, an example of the data creating means; the flash RAM 132, an example of the second storing means; the copyright-data comparison section 206, an example of the data comparing means; the control section 202, an example of the mounting means and the opening means; the volume copyright data 134, an example of the volume-alteration detection data; and the file copyright data, an example of the file-alteration detection data.

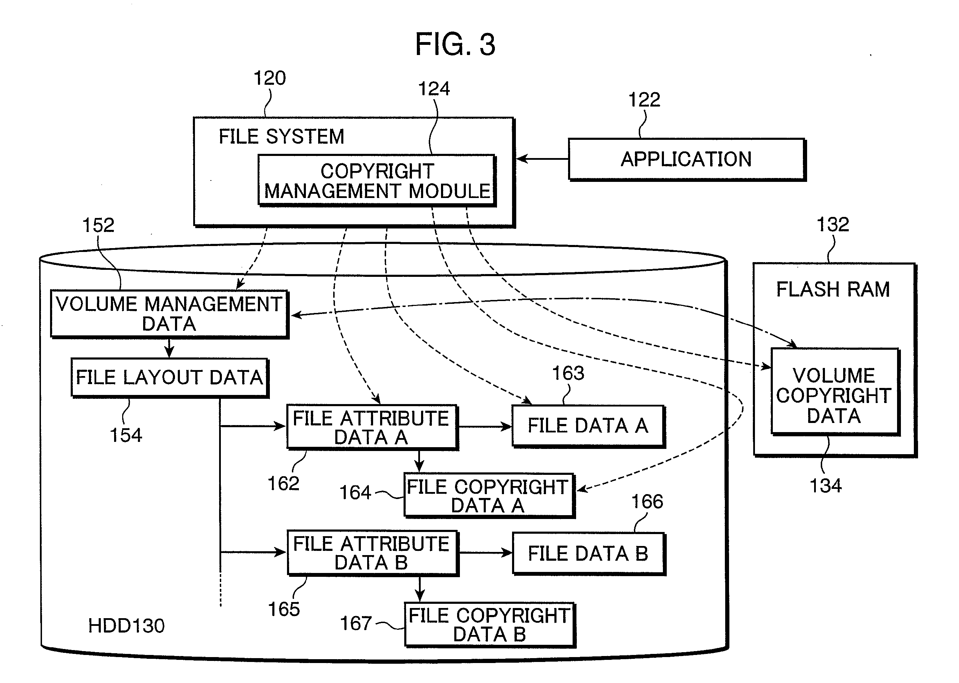

Next, in the file management system 100, the configuration of a file will be described. Fig. 3 is a block diagram, showing an example of the file configuration of the file management system 100 according to the embodiment of the present invention. This file configuration is also a file configuration which is created, managed, controlled, updated and deleted by the file system 120.

The file system 120 is started by a call from the application 122, and then, it starts a processing. For example, there is a case where the application 122 calls out to the file system 120 to start operating for the purpose of creating one new file A in the HDD 130. Using this case, the file management system 100 and the file system 120 will be described.

In order to create the new file A in the HDD 130, the file system 120 starts to operate. First, the file system 120 refers to the volume management data 152 inside of the HDD 130. Thereby, it acquires a state of the file system of the entire HDD 130.

The following data is especially necessary at this time: the file layout data 154 which indicates a file layout state of the file system of the entire HDD 130; and the volume copyright data 134 for managing copyright information on the file of the entire HDD 130. The volume copyright data 134 is stored in, for example, the flash RAM 132 which is recording medium other than the HDD 130.

The flash RAM 132 is used because it is a non-volatile memory which can keep the storage contents, even if the power is turned off. Besides, recording media except the HDD 130 are used because they can maintain a management state, even if the HDD 130 is altered, or even though it develops some damage, malfunction or the like.

Herein, the flash RAM 132 other than the HDD 130 is used as the recording medium which stores the volume copyright data 134. However, that is merely an example, and thus, information may also be stored, using another semiconductor memory, a magnetic memory, an optical memory, or a combination of these.

The volume copyright data 134 is the copyright management information of all the pieces of data which are stored in the whole volume of the HDD 130. For example, among the files which are stored in the whole volume of the HDD 130, the strictest copyright information may also be typically used so that copyright management can be executed. Besides, for example, among the files which are stored in the whole volume of the HDD 130, the laxest copyright information may also be typically used so that copyright management can be executed. Furthermore, in this way, a single piece of copyright information is not necessarily typically used. Copyright management may also be executed in a group unit by grouping a bunch of files in some method. Still Further, copyright management may also be executed in an individual file unit, or these copyright management methods may also be combined so that copyright management can be executed in the whole volume of the HDD 130.

A copyright management module 124 manages such volume copyright data 134. However, this is also merely an example, and thus, the copyright management module 124 not necessarily executes such management. The file system 120 itself, a part of the file system 120, or some software except the file system 120, may also execute it. Or, according to another embodiment, the file management system 100 may also be used in which there is not necessarily this volume copyright data 134.

In this embodiment, simply as an example, the copyright management module 124 uses the volume copyright data 134 which is stored in the flash RAM 132. Thereby, copyright management can be executed in the whole HDD 130.

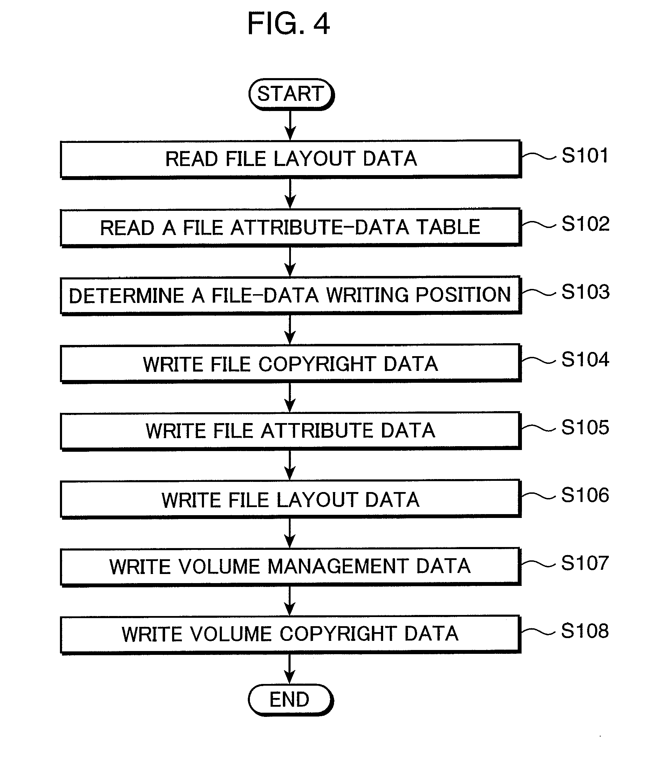

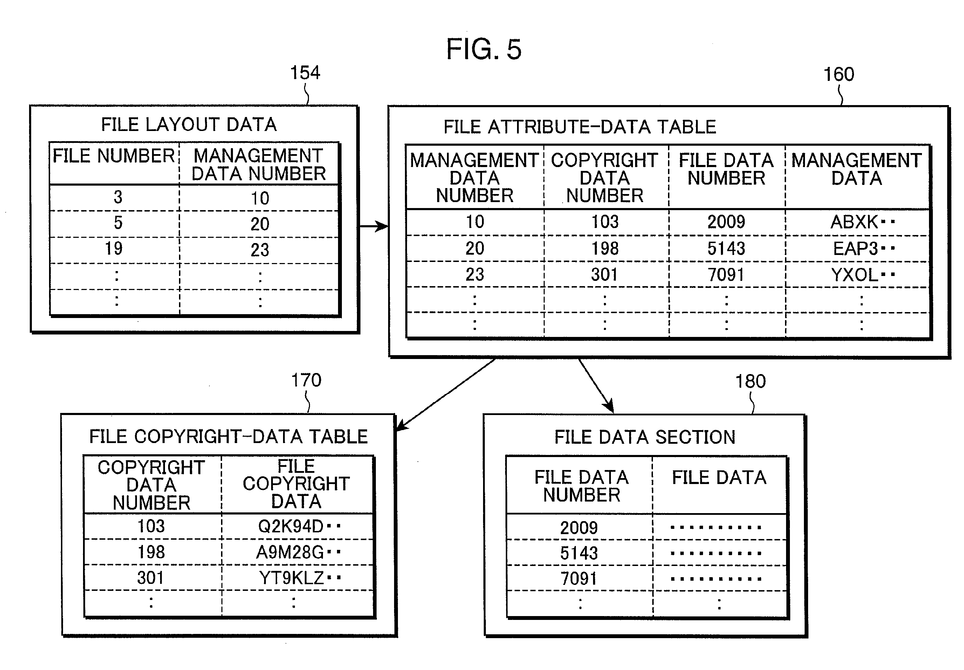

Herein, a file creation processing at the time when a file is created will be described. Fig. 4 is a flow chart, showing a file creation processing which is executed when a file is created. Herein, the file creation processing shown in Fig. 4 is a processing which is executed by the file management system 100 shown in Fig. 2. In addition, Fig. 5 is tables, showing an example of the configuration of file management data.

First, a request is made to create a new file from the application 122. Then, in a step S101, the file-data input-and-output section 204 reads the file layout data 154 and outputs it to the volume management section 203. The volume management section 203 outputs the file layout data 154 it has inputted to the copyright-data creation section 205. The copyright-data creation section 205 determines a file number for a newly-created file.

The file layout data 154 is used to store and manage layout data on each file which is stored in this whole volume of the HDD 130. Its example is shown, for example, in Fig. 5. In the example shown in Fig. 5, in the file layout data 154, three files are registered of a file number "3", a file number "5" and a file number "19". These three files are stored in the whole volume of the HDD 130. Of course, this is merely an example, an thus, more files may also be stored.

Each file number is equivalent to an ID for identifying and specifying each file. The ID for identifying and specifying each file is not necessarily a file number like this. For example, it can be a full path and a file name for a directory in which there is a file. Or, its code address or abbreviation, only its part, or a combination of these, can also be used. However, in this embodiment, for convenience of explanation, as an example, let's assume that each file number is equivalent to the ID for identifying and specifying each file.

In each of the three files of the file number "3", the file number "5" and the file number "19", a management data number is stored so that the former corresponds to the latter. In the example shown in Fig. 5, a management data number "10" for a file corresponds to the file number "3"; a management data number "20", to the file number "5"; and a management data number "23", to the file number "19".

For example, let's assume there are already the files which are specified by the file number "3" and the file number "5", and that the file system 120 starts to be operated to freshly create a file A. In this way, if the file system 120 starts, then in order to newly create the file A, the file system 120 creates the file number "19". Then, it registers it in the file layout data 154. Fig. 5 shows the file layout data 154 at this time.

After registering the file number "19" for the newly-created file A in the file layout data 154, sequentially, the file system 120 assigns the management data number "23" which corresponds to this file number "19". Then, it creates file attribute data A (162) in the file attribute-data table 160.

Returning to Fig. 4, in a step S102, the file-data input-and-output section 204 reads out the file attribute-data table 160. Then, it outputs it to the volume management section 203. The volume management section 203 outputs the file attribute-data table 160 it has inputted to the copyright-data creation section 205. The copyright-data creation section 205 allocates a new management data number to the file attribute-data table 160. Then, it determines a position in which a file attribute data on a newly-created file is written.

This file attribute data A (162) is data which includes various kinds of attribute data on the newly-created file A. In the example shown in Fig. 5, the file attribute data A (162) includes, for example: the management data number "23"; a copyright data number "301" ; a file data number "7091" ; and a management data "YXOL··". Of course, this is merely an example. Thus, more information may also be included, or some information may not be included. Besides, the contents of information like this are simply a provisional example.

The copyright data number "301" is a management number for storing and managing file copyright data A (164) for this newly-created file A in the file copyright-data table 170.

Moving back to Fig. 4, in a step S103, the file-data input-and-output section 204 reads out the file data section 180. Then, it outputs it to the volume management section 203. The volume management section 203 outputs the file data section 180 it has inputted to the copyright-data creation section 205. The copyright-data creation section 205 freshly allocates a file data number to the file data section 180. Then, it determines a position in which a newly-created file data is written. Herein, if there is the written file data, it may also be written in there.

The file data number "7091" is a management number for storing and managing actual file data A (163) for this newly-created file A in the file data section 180. As shown in Fig. 5, the file data number for this newly-created file A is "7091" which is stored and managed at the management data number "23" in the file attribute-data table 160. Hence, the actual file data A (163) for this newly-created file A is stored and managed at the file data number "7091" in the file data section 180.

In the example shown in Fig. 5, the contents of the actual file data A (163) for this newly-created file A are not particularly specified, and they are expressed simply as "··· ··· ··· ···". This actual file data A (163) is data which is actually read and written by the application 122.

Returning to Fig. 4, in a step S104, the copyright-data input-and-output section 207 reads out the file copyright-data table 170. Then, it outputs it to the volume management section 203. The volume management section 203 outputs the file copyright-data table 170 it has inputted to the copyright-data creation section 205. In order to write copyright data on a newly-created file, the copyright-data creation section 205 assigns a copyright data number to the file copyright-data table 170. Then, the copyright-data creation section 205 creates file copyright data. Next, it stores, in the file copyright-data table 170, the file copyright data it has created so that the file copyright data corresponds to the copyright data number. Then, the copyright-data creation section 205 outputs the file copyright-data table 170 it has created to the copyright-data input-and-output section 207. At this time, the copyright-data creation section 205 creates check data based on the file data. Then, it creates file copyright data which includes the check data it has created. The copyright-data input-and-output section 207 writes, into the HDD 130, the file copyright-data table 170 which has been created by the copyright-data creation section 205.

As shown in Fig. 5, the copyright data number for this newly-created file A is "301" which is stored and managed at the management data number "23" in the file attribute-data table 160. Hence, the file copyright data A (164) for this newly-created file A is "YT9KLZ··" which is stored and managed at the copyright data number "301" in the file copyright-data table 170.

The above described volume copyright data 134 is information for managing the copyright of the entire volume of the HDD 130. In contrast, this file copyright data A (164) is information for managing a copyright in each file unit.

This file copyright data A (164) is often subjected to various types of processing so that it can be prevented from being altered. That processing includes encoding it, giving an electronic signature, or adding an electronic watermark. However, it is not necessarily limited to such processing. Thus, another type of processing may also be executed, or no special processing may be conducted.

Furthermore, the contents of copyright management which is expressed by this file copyright data A (164) are, for example, copy once (i.e., a copy can be made only once), copy never (i.e., a copy can never be made), copy free (i.e., a copy can be freely made), or the like, which is copy control information for the file A.

Or, moreover, Furthermore, in another example, the contents of copyright management which is expressed by this file copyright data A (164) are check data for prohibiting and detecting an alteration to the whole file A, or a key for encoding or an electronic watermark.

Such information is stored as the file copyright data A (164), thereby hindering the file A's data from being altered, even though that is a part of it. Besides, even if it is altered, that can be detected. However, that is merely an example, and thus, the contents of other various kinds of copyright management may also be expressed.

Hence, according to the present invention, the contents of data are encoded, and its encoding key is managed inside of the file. Therefore, even dishonest access to a part of the file system can be effectively prevented. In the case where the file management system is applied to a DVD recorder, the seeking for the disk head can be kept from increasing. This helps prevent the access speed from becoming lower.

Moving back to Fig. 4, in a step S105, the copyright-data creation section 205 writes the file data number which is allocated in the step S103, the copyright data number which is allocated in the step S104 and the data for management into the writing position of the file attribute-data table 160 which is determines in the step S102.

The management data of the file attribute-data table 160 includes information on various kinds of management for the newly-created file A. Such information is, for example, its creator, manager, owner, creation date, creation time, capacity, storage period, check data, or various kinds of information on encoding.

In the above described example of this embodiment, various kinds of information for the control of a copy, or information for the detection of an alteration, is stored in the file copyright data A (164). However, in another embodiment, these various kinds of copy-control information or alteration-detection information may also be stored in the management data of this file attribute-data table 160.

In this example of the embodiment, in this management data of the file attribute-data table 160, for example, the following can be stored: copy once (i.e., a copy can be made only once); copy never (i.e., a copy can never be made); copy free (i.e., a copy can be freely made); or the like, which is the copy control information for the file A. Or, in another example, check data for prohibiting and detecting an alteration to the whole file A, a key for encoding or an electronic watermark, or both of them, can be stored.

Such information is stored as the management data of the file attribute-data table 160, thereby hindering the file A's data from being altered, even though that is a part of it. Besides, even if it is altered, that can be detected. However, that is merely an example. Thereby, together with this information or apart from the information, other various kinds of information may also be stored.

Next, in a step S106, the copyright-data creation section 205 allows the file number of the file layout data 154 which is determined at the step S101 to correspond to the management data number which is assigned in the step S102.

As shown in Fig. 5, the file system 120 registers the management data number "23" in the file layout data 154, so that it corresponds to the file number "19". Of course, this file number "19" and the management data number "23" are merely a virtual example. Ordinarily, a so-called free number which has not been used is allocated and used.

Returning to Fig. 4, in a step S107, the file-data input-and-output section 204 reads out the volume management data 152. Then, it outputs it to the volume management section 203. The volume management section 203 updates the volume management data 152 it has inputted and outputs it to the file-data input-and-output section 204 and the copyright-data creation section 205. The file-data input-and-output section 204 writes, into the HDD 130, the volume management data 152 which is updated by the volume management section 203.

Next, in a step S108, on the basis of the volume management data 152 which is updated by the volume management section 203, the copyright-data creation section 205 creates the volume copyright data 134. Then, it outputs it to the copyright-data input-and-output section 207. The copyright-data input-and-output section 207 writes, into the flash RAM 132, the volume copyright data 134 which is created by the copyright-data creation section 205. Thereby, the processing is completed.

In the description which has so far been given, the newly-created file A has been mentioned. However, when this file A is referred to and updated after being once created, in the same way as described earlier, it is called from the application 122. Thereby, the file system 120 starts to operate and begins the processing of reference or updating.

At the beginning of this processing, the file system 120 refers to the volume management data 152. Then, it retrieves the volume copyright data 134 and the file layout data 154. The copyright management module 124 refers, for example, to the volume copyright data 134, and thus, executes copyright management for the entire volume. This has already been described above, and thus, its detailed description is omitted.

On the other hand, the file system 120 refers to the file layout data 154, the file attribute-data table 160 and the file copyright-data table 170. Thereby, it manages the file A, so that reference to, or updating of, the file A can be permitted or prohibited. Simultaneously, if necessary, the file system 120 updates the file layout data 154, the file attribute-data table 160 and the file copyright-data table 170.

Furthermore, the file system 120 refers to, or updates, the file layout data 154, the file attribute-data table 160 and the file data section 180. Thereby, it executes reference to, or updating of, the file A which is requested from the application 122.

At the same time, if necessary, the file system 120 occasionally updates the file layout data 154, the file attribute-data table 160 and the file copyright-data table 170. For example, when copy control information, such as copy once, is stored in the file copyright data A (164), the file system 120 executes copy control by referring to the contents of this file copyright data A (164).

Or, when check data on the file data A (163), information on a encoding key or an electronic watermark, or the like, is stored in the file copyright data A (164), the file system 120 refers to the contents of this file copyright data A (164). Thereby, in terms of the file data A (163), a confirmation and a verification can be executed whether even a part of it has not been altered.

With respect to these, for example, when copy control information such as copy once is stored in the management data of the file attribute-data table 160, the file system 120 can execute the control of a copy by referring to the contents of this management data of the file attribute-data table 160. Or, when check data on the file data A (163), information on a encoding key or an electronic watermark, or the like, is stored in the management data of the file attribute-data table 160, the file system 120 refers to the contents of this management data of the file attribute-data table 160. Thereby, in terms of the file data A (163), a confirmation and a verification can be executed whether even a part of it has not been altered.

As described above, the file system 120 confirms all of the copyright management by the volume copyright data 134, and the file number, management data number, copyright data number, file data number, data for management, file copyright data and file data which are stored in the file layout data 154, the file attribute-data table 160, the file copyright-data table 170 and the file data section 180. Thereby, it verifies their consistency. Thereafter, the volume of the HDD 130 is mounted, or the file data is opened. Hence, an embodiment can also be used in which such a processing is executed.

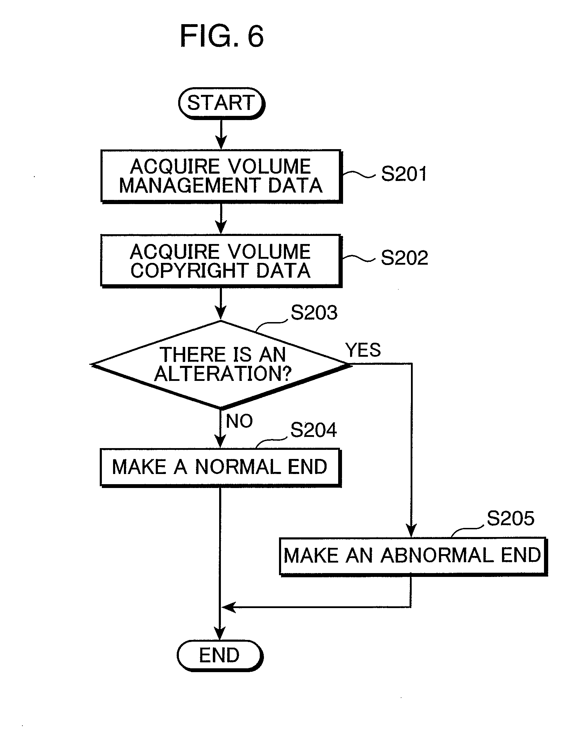

Next, description will be given about the processing for detecting an alteration at the time when a volume is mounted. Fig. 6 is a flow chart, showing an alteration detection processing which is executed when a volume is mounted. Herein, the alteration detection processing for a volume shown in Fig. 6 is a processing which is executed by the file management system 100 shown in Fig. 2.

First, a request for access to the HDD 130 is made from the application 122. Then, in a step S201, the copyright-data comparison section 206 acquires the volume management data 152. Specifically, if a mounting request is inputted via the input-and-output section 201 from the application 122, the control section 202 instructs the volume management section 203 to acquire the volume management data 152. The volume management section 203 instructs the file-data input-and-output section 204 to read the volume management data 152. The file-data input-and-output section 204 reads the volume management data 152 from the HDD 130. Then, it outputs it to the volume management section 203. The volume management section 203 outputs the volume management data 152 it has inputted to the copyright-data comparison section 206.

Next, in a step S202, the copyright-data comparison section 206 acquires the volume copyright data 134. Specifically, if a mounting request is inputted via the input-and-output section 201 from the application 122, the control section 202 instructs the volume management section 203 to acquire the volume management data 152. Simultaneously, it instructs the copyright-data comparison section 206 to acquire the volume copyright data 134. The copyright-data comparison section 206 instructs the copyright-data input-and-output section 207 to read the volume copyright data 134. The copyright-data input-and-output section 207 reads the volume copyright data 134 which is stored in the flash RAM 132. Then, it outputs it to the copyright-data comparison section 206.

Next, in a step S203, the copyright-data comparison section 206 compares the volume management data 152 which is inputted from the volume management section 203 and the volume copyright data 134 which is inputted from the copyright-data input-and-output section 207. Thereby, a decision is made whether or not there is an alteration to the volume.

If the decision is made that it has not been altered (NO at the step S203), in a step S204, the copyright-data comparison section 206 notifies the control section 202 that the volume has not been altered. The control section 202 decides that the mounting processing has been normally executed. Then, it completes the alteration detection processing for the volume.

On the other hand, if the decision is made that it has been altered (YES at the step S203), in a step S205, the copyright-data comparison section 206 notifies the control section 202 that the volume has been altered. The control section 202 decides that the mounting processing has not been normally executed and has ended in failure. Then, it terminates the alteration detection processing for the volume. In this case, the control section 202 notifies the application 122 that the mounting processing has resulted in failure.

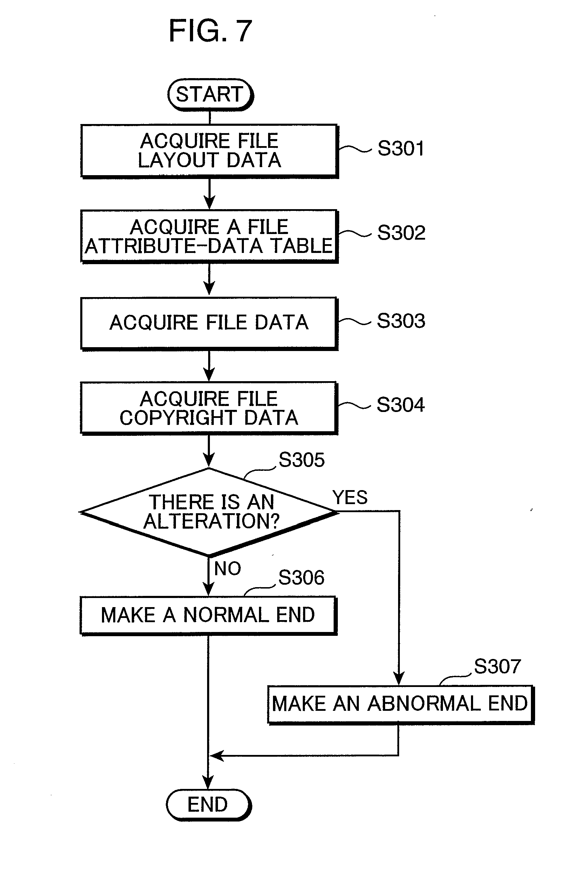

Next, description will be given about the processing for detecting an alteration at the time when a file is opened. Fig. 7 is a flow chart, showing an alteration detection processing which is executed when a file is opened. Herein, the alteration detection processing for a file shown in Fig. 7 is a processing which is executed by the file management system 100 shown in Fig. 2.

First, a request to open a file is made from the application 122. Then, in a step S301, the copyright-data comparison section 206 acquires the file layout data 154. Specifically, if the file-opening request is inputted via the input-and-output section 201 from the application 122, the control section 202 instructs the volume management section 203 to acquire the file layout data 154. The volume management section 203 instructs the file-data input-and-output section 204 to read the file layout data 154. The file-data input-and-output section 204 reads the file layout data 154 from the HDD 130. Then, it outputs it to the volume management section 203. The volume management section 203 outputs the file layout data 154 it has inputted to the copyright-data comparison section 206. Herein, the application 122 designates a file number of a file to be opened. The copyright-data comparison section 206 acquires a management data number which corresponds to the file number, from the file layout data 154 it has inputted from the volume management section 203.

Next, in a step S302, the copyright-data comparison section 206 acquires the file attribute-data table 160. Specifically, the control section 202 instructs the volume management section 203 to acquire the file attribute-data table 160. The volume management section 203 instructs the file-data input-and-output section 204 to read the file attribute-data table 160. The file-data input-and-output section 204 reads the file attribute-data table 160 from the HDD 130. Then, it outputs it to the volume management section 203. The volume management section 203 outputs the file attribute-data table 160 it has inputted to the copyright-data comparison section 206. From the file attribute-data table 160 it has inputted from the volume management section 203, the copyright-data comparison section 206 acquires a copyright data number, a file data number and management data which correspond to the management data number it has acquired at the step S301.

Next, in a step S303, the copyright-data comparison section 206 acquires the file data section 180. Specifically, the control section 202 instructs the volume management section 203 to acquire the file data section 180. The volume management section 203 instructs the file-data input-and-output section 204 to read the file data section 180. The file-data input-and-output section 204 reads the file data section 180 from the HDD 130. Then, it outputs it to the volume management section 203. The volume management section 203 outputs the file data section 180 it has inputted to the copyright-data comparison section 206. From the file data section 180 it has inputted from the volume management section 203, the copyright-data comparison section 206 acquires file data which corresponds to the file data number it has acquired at the step S302.

Next, in a step S304, the copyright-data comparison section 206 acquires the file copyright-data table 170. Specifically, the control section 202 instructs the copyright-data comparison section 206 to acquire the file copyright-data table 170. The copyright-data comparison section 206 instructs the copyright-data input-and-output section 207 to read the file copyright-data table 170. The copyright-data input-and-output section 207 reads the file copyright-data table 170 from the HDD 130. Then, it outputs it to the copyright-data comparison section 206.

Next, in a step S305, the copyright-data comparison section 206 compares the file data which it has acquired at the step S303 and the check data which is included in the file copyright data of the file copyright-data table 170 it has acquired at the step S304. Thereby, a decision is made whether or not there is an alteration to the file.

If the decision is made that it has not been altered (NO at the step S305), in a step S306, the copyright-data comparison section 206 notifies the control section 202 that the file has not been altered. The control section 202 decides that the file-opening processing has been normally executed. Then, it completes the alteration detection processing for the file.

On the other hand, if the decision is made that it has been altered (YES at the step S305), then in a step S307, the copyright-data comparison section 206 notifies the control section 202 that the file has been altered. The control section 202 decides that the file-opening processing has not been normally executed and has ended in failure. Then, it ends the alteration detection processing for the file. In this case, the control section 202 notifies the application 122 that the file-opening processing has resulted in failure.

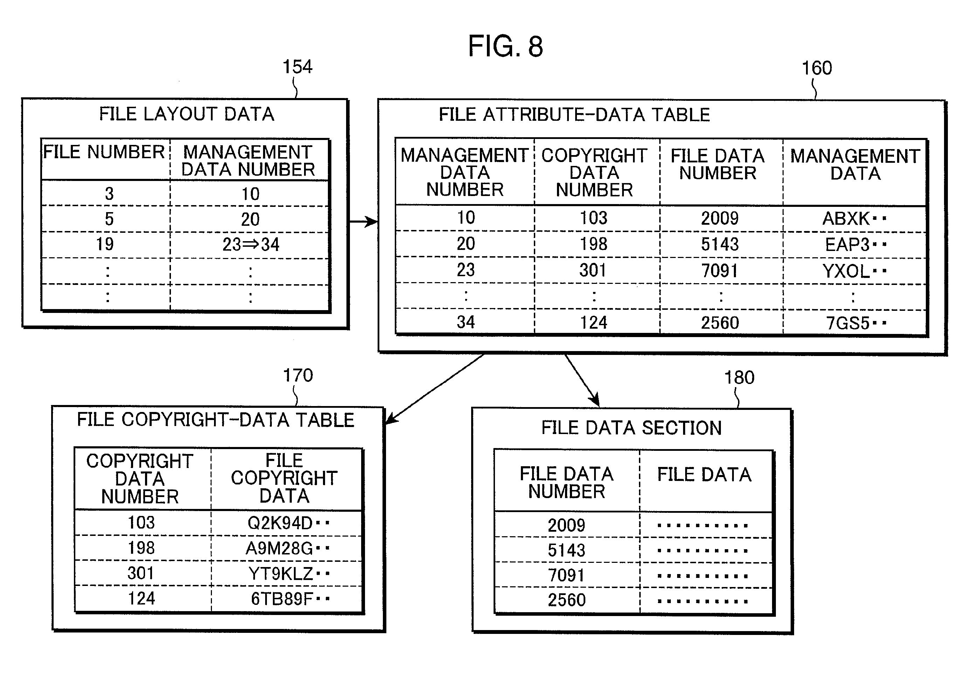

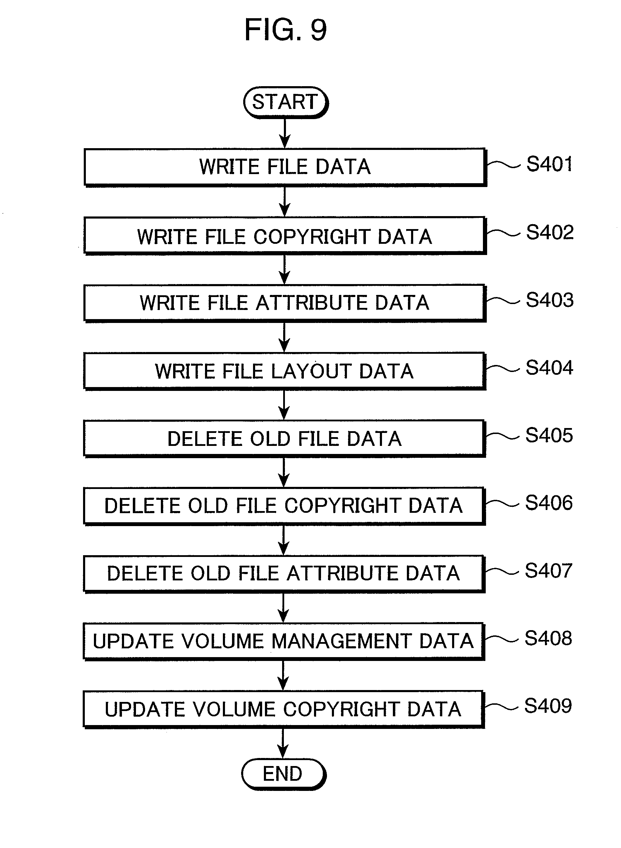

Next, a processing at the time when this file system 120 updates the file layout data 154, the file attribute-data table 160, the file copyright-data table 170 and the file data section 180 will be described in detail, using Fig. 8 and Fig. 9. Fig. 8 is tables, showing the update of a file in the file management system 100 according to the embodiment of the present invention.

In the example shown in Fig. 8, the file copyright data A for the file A is changed from "YT9KLZ··" to "6TB89F ··". This causes the copyright data number to change from "301" to "124" and the file data number to change from "7091" to "2560".

The actual file data A is simply given as "··· ··· ··· ···", and thus, its specific contents cannot be recognized. However, according to the application 122's request, it is subjected to some change which the application 122 needs. The management data is also changed from "YXOL··" to "7GS5··". Along with the above described changes, the management data number is changed from "23" to "34".

The changes like this are made when various causes are produced. For example, the management data "YXOL··" undergoes some cause, for example, a change in its storage period. Or, the changes are made if various kinds of information on encoding are changed, for example, in the case where information on a encoding key, a decoding key or an electronic watermark is changed when a certain period elapses for the purpose of enhancing security, or in another such case.

Or, the contents of the file data A itself are changed according to a request from the application 122. This causes check data to change, so that the above described changes can also be produced.

Furthermore, the changes can also be produced in the case where the file copyright data A is subjected to some cause. For example, although it was previously copy once (i.e., a copy can be made only once), it turns into copy never (i.e., a copy can never be made) once a copy is made. However, this is merely an example. These changes can be produced even from other various causes, and they may not be brought about, depending upon an embodiment.

In the example shown in Fig. 8, the assumption is given that the file data number, the file copyright data A (164), the copyright data number and the management data number are all changed. However, this is merely an example, and thus, all of these are not necessarily changed like this example. There is also another embodiment in which only a part of them is changed.

As described in the example of Fig. 8, let's assume that the file data number, the file copyright data A (164), the copyright data number and the management data number are all changed. This is because no change is essentially made about each description.

Fig. 9 is a flow chart, showing a file update processing at the time when a file is updated. Herein, the file update processing shown in Fig. 9 is a processing which is executed by the file management system 100 shown in Fig. 2.

First, the input-and-output section 201 outputs, to the control section 202, a request to update file data from the application 122. The control section 202 instructs the volume management section 203 to update the file data. Then, it outputs the file data to be updated to the volume management section 203 and the copyright-data creation section 205. In a step S401, the volume management section 203 reads the file data section 180 via the file-data input-and-output section 204. Then, it allocates a file data number which is different from the file data number that is currently stored, and determines a position in which the file data is written. At this time, the file-data writing position is a position different from that of the file data before updated. The volume management section 203 writes the file data in the position which corresponds to the file data number it has determined.

As shown in Fig. 8, let's assume that the whole file data A (163), or a part of it, is changed into a new file data A (which is the same reference character for convenience of explanation). The new file data A is recorded, for example, in a place which is conventionally a free area of the file data section 180. Its file data number is set, for example, like "2560".

Or, another embodiment may also be implemented in which since the area of the file data number "2560" is, for example, a free area, this free area is detected and the new file data A is recorded. Substantially, no change is made.

Returning to Fig. 9, in a step S402, the volume management section 203 reads out the file copyright-data table 170 via the copyright-data input-and-output section 207. Then, it allocates a copyright data number which is different from the copyright data number that is currently stored, and determines a position in which the file copyright data is written. At this time, the file copyright-data writing position is a position different from that of the file copyright data before updated. Then, the copyright-data creation section 205 creates check data based on the file data, and creates file copyright data which includes the check data it has created. The copyright-data input-and-output section 207 writes, in the HDD 130, the file copyright-data table 170 which is created by the copyright-data creation section 205.

As shown in Fig. 8, let's assume that the file copyright data A (164) is changed from "YT9KLZ··" to "6TB89F··". Why such a change is produced and what it means are already described above.

At this time, a free area of the file copyright-data table 170 is detected. Then, "6TB89F··" is recorded as the file copyright data. As this area's copyright data number, for example, "124" is set.

Or, another embodiment may also be implemented in which the fact that the area where the copyright data number of the file copyright-data table 170 is "124" is a free area is detected, and "6TB89F··" is recorded as this area's file copyright data.

Moving back to Fig. 9, in a step S403, the volume management section 203 reads out the file attribute-data table 160 via the file-data input-and-output section 204. Then, it allocates a management data number which is different from the management data number that is currently stored, and determines a position in which the file attribute data is written. Then, the volume management section 203 writes, in the file attribute-data table 160, the file data number which is determined at the step S401, the copyright data number which is determined at the step S402 and the management data.

As shown in Fig. 8, this file data number "2560" is recorded in a file-data number field which is a free area of the file attribute-data table 160. Its management data number is set, for example, to "34".

Or, another embodiment may also be implemented in which the fact that the area where the management data number of the file attribute-data table 160 is "34" is a free area is detected, and the above described "2560" is recorded in this area's file data number.

Then, this copyright data number "124" is recorded in the field of the copyright data number of the management data number "34" which is set for the new file data A in the file attribute-data table 160.

Moreover, the management data is also changed from "YXOL·· " to "7GS5··". Then, it is recorded in the field of the management data of the management data number "34" which is an area for the new file data A in the file attribute-data table 160. Why such a change is produced and what it means are already described above.

Hence, the new file data A (163) itself for the new file data A, the new file data number "2560", the file copyright data A "6TB89F··" (164), the copyright data number "124", the management data "7GS5··" and the management data number "34" are all created in the file data section 180, the file copyright-data table 170 and the file attribute-data table 160.

However, at this stage, all of the management data number "23", the file data number "7091", the copyright data number "301", the file copyright data A "YT9KLZ··" (164), the file data A (163) itself and the management data "YXOL ··" for the former file data A are not changed at all. All of them remains intact.

Therefore, in the process of updating the file data A until this stage, even if the power is turned off, or even though other various abnormal states are produced, the file-system configuration for the initial file data A is maintained as it is. This prevents some inconsistency from being caused in the file system.

Returning to Fig. 9, in a step S404, the volume management section 203 reads out the file layout data 154 via the file-data input-and-output section 204. Then, it rewrites the management data number which corresponds to the file number of the file data to be updated into the management data number it has determined at the step S403.

As shown in Fig. 8, after the new file data A (163) itself for the new file data A, the new file data number "2560", the file copyright data A "6TB89F··" (164), the copyright data number "124", the management data "7GS5··" and the management data number "34" are all created in the file data section 180, the file copyright-data table 170 and the file attribute-data table 160, the management data number which corresponds to the file number "19" inside of the file layout data 154 for the new file data A is changed from "23" to "34". As a result, the contents of the file data A are changed from the conventional one to the fresh one.

Herein, in this embodiment, only the single file layout data 154 is stored in the HDD 130. However, the present invention is not limited especially to this. In the HDD 130, two pieces of file layout data 154 may also be stored.

Specifically, when file data is updated, the volume management section 203 deletes the management data number before updated which is stored in one of the two pieces of file layout data. Then, the volume management section 203 rewrites the management data number which is stored in the one of the pieces of file layout data into a new management data number after updated. Sequentially, the volume management section 203 deletes the management data number before updated which is stored in the other of the two pieces of file layout data. Then, the volume management section 203 rewrites the management data number which is stored in the other of the pieces of file layout data into a fresh management data number after updated.

In this way, the HDD 130 stores two pieces of file layout data, and the volume management section 203 rewrites the management data number of one of the pieces of file layout data. Thereafter, it rewrites the management data number of the other of the pieces of file layout data. Therefore, in the process of rewriting the management data number of the file layout data, even if the power is turned off, then the management data number which corresponds to the file number is sure to be stored in either of the two pieces of file layout data. This hinders falling into a situation in which there is no management data number which corresponds to the file number.

Moving back to Fig. 9, in a step S405, the volume management section 203 deletes the file data which corresponds to the file data number before updated that is stored in the file data. Next, in a step S406, the volume management section 203 deletes the file copyright data which corresponds to the copyright data number before updated that is stored in the file copyright-data table 170. Sequentially, in a step S407, the volume management section 203 deletes the file attribute copyright data (i.e., the copyright data number, file data number and management data) which corresponds to the management data number before updated that is stored in the file attribute-data table 160.

Next, in a step S408, the file-data input-and-output section 204 reads the volume management data 152 and outputs it to the volume management section 203. The volume management section 203 updates the volume management data 152 it has inputted and outputs it to the file-data input-and-output section 204. The file-data input-and-output section 204 writes, into the HDD 130, the volume management data 152 which is updated by the volume management section 203.

Next, in a step S409, the volume management section 203 outputs the volume management data 152 it has updated to the copyright-data creation section 205. On the basis of the volume management data 152 which is updated by the volume management section 203, the copyright-data creation section 205 creates the volume copyright data 134. Then, it outputs it to the copyright-data input-and-output section 207. The copyright-data input-and-output section 207 writes, into the flash RAM 132, the volume copyright data 134 which is created by the copyright-data creation section 205. Thereby, the processing is completed.

As described so far, in the processing for updating the file data A which is executed by the file system 120, the power is turned off, or other various abnormal states are produced in the process of updating the file data A. However, even in such a case, the file-system configuration for the initial file data A is maintained as it is. This prevents some inconsistency from being caused in the file system.

Furthermore, such processing is all executed by the file system 120. This suggests that there is no need for the application 122 to involve it. Moreover, there is an embodiment in which information on check data for detecting an alteration, an encoding key or an electronic watermark is held in either of the file copyright data A (164) and the management data of the file attribute-data table 160, or both of them. In such an embodiment, if the file data A (163) is falsified, that alteration can be detected, even though only a part of it is altered.

This helps lighten a processing load which is borne by an application, and also largely shorten the process of developing an application. Simultaneously, even if an abnormal situation such as power off is produced while a file system is executing a file-update processing, the file system's consistency can be maintained and secured.

Still further, without depending upon an application, unified copyright management, or alteration management for a part or the whole of a file, can also be executed.

Herein, the above described specific embodiment mainly includes an invention which has the following configuration.

A file management apparatus according to the present invention includes: a first storing means for storing a file, and storing volume management data for managing a volume which includes the file; a data creating means for creating volume-alteration detection data for detecting an alteration to the volume management data when the file is written; a second storing means for storing the volume-alteration detection data which is created by the data creating means, the second storing means being disposed in a position physically different from the first storing means; a data comparing means for reading the volume management data from the first storing means when the volume is mounted, reading the volume-alteration detection data from the second storing means, and comparing the volume management data and the volume-alteration detection data; and a mounting means for mounting the volume if the data comparing means decides that there is no alteration.

According to this configuration, in the first storing means, a file is stored, and volume management data for managing a volume which includes the file is stored. Then, the data creating means creates volume-alteration detection data for detecting an alteration to the volume management data when the file is written. In the second storing means which is disposed in a position physically different from the first storing means, there is stored the volume-alteration detection data which is created by the data creating means. Then, the data comparing means reads the volume management data from the first storing means when the volume is mounted, reads the volume-alteration detection data from the second storing means, and compares the volume management data and the volume-alteration detection data. If the data comparing means decides that there is no alteration, the mounting means mounts the volume.

Therefore, using the volume-alteration detection data which is stored in the second storing means which is disposed in a position physically different from the first storing means, a decision is made whether or not the volume has been altered. Thereby, an alteration to the volume can be certainly detected, thus preventing the volume from being falsified.

In addition, in the above described file management apparatus, it is preferable that: the first storing means further store file management data for managing the file; the data creating means further create file-alteration detection data for detecting an alteration to the file management data when the file is written; the second storing means further store the file-alteration detection data which is created by the data creating means; the data comparing means further read the file management data from the first storing means when the file is opened, read the file-alteration detection data from the second storing means, and compare the file management data and the file-alteration detection data; and an opening means for opening the file, if the file data comparing means decides that there is no alteration, be further provided.

According to this configuration, in the first storing means, file management data for managing the file is further stored. By the data creating means, file-alteration detection data for detecting an alteration to the file management data when the file is written is further created. In the second storing means, the file-alteration detection data which is created by the data creating means is further stored. By the data comparing means, the file management data is read from the first storing means when the file is opened, the file-alteration detection data is read from the second storing means, and the file management data and the file-alteration detection data which are read out are compared. If the file data comparing means decides that there is no alteration, then by the opening means, the file is opened.

Therefore, using the file-alteration detection data which is stored in the second storing means which is disposed in a position physically different from the first storing means, a decision is made whether or not the file has been altered. Thereby, an alteration to individual files inside of the volume can be certainly detected, thus preventing the files from being falsified.

Furthermore, in the above described file management apparatus, preferably, the first storing means should store the file management data by relating the file management data to the file-alteration detection data.

According to this configuration, the file management data is stored by relating it to the file-alteration detection data. Therefore, the file management data and the file-alteration detection data can be certainly compared.

Moreover, in the above described file management apparatus, preferably, the first storing means should store the file management data which includes data for specifying the file-alteration detection data.

According to this configuration, the file management data which includes data for specifying the file-alteration detection data is stored. Therefore, by referring to the data for specifying the file-alteration detection data, the file-alteration detection data which is related to the file management data can be specified.

In addition, in the above described file management apparatus, preferably, when the file-alteration detection data and the data for specifying the file-alteration detection data are updated, the data creating means should create new file-alteration detection data, and thereafter, should change the data for specifying the file-alteration detection data so that the new file-alteration detection data is specified.

According to this configuration, when the file-alteration detection data and the data for specifying the file-alteration detection data are updated, by the data creating means , new file-alteration detection data is created, and thereafter, the data for specifying the file-alteration detection data is changed so that the new file-alteration detection data can be specified.

Therefore, even if an abnormal operation such as power off is produced while the file-alteration detection data and the data for specifying the file-alteration detection data are updated, then the data for specifying the file-alteration detection data is changed after new file-alteration detection data is created. Hence, the file-alteration detection data before it is updated and the data for specifying the file-alteration detection data before it is updated remain. This helps maintain the consistency of data and normally detect an alteration to the file.

Furthermore, in the above described file management apparatus, it is preferable that: when the file-alteration detection data and the data for specifying the file-alteration detection data are updated, the first storing means store the data for specifying the file-alteration detection data before updated and the new file-alteration detection data; and the data creating means create the new file-alteration detection data, thereafter, change the data for specifying the file-alteration detection data so that the new file-alteration detection data is specified, and delete the data for specifying the file-alteration detection data before updated which is stored in the first storing means.

According to this configuration, when the file-alteration detection data and the data for specifying the file-alteration detection data are updated, in the first storing means, the data for specifying the file-alteration detection data before updated and the new file-alteration detection data are stored. Then, by the data creating means, after the new file-alteration detection data is created, thereafter, the data for specifying the file-alteration detection data is changed so that the new file-alteration detection data is specified, and the data for specifying the file-alteration detection data before updated which is stored in the first storing means is deleted.

Therefore, when the file-alteration detection data and the data for specifying the file-alteration detection data are updated, the data for specifying the file-alteration detection data before it is updated is stored until the data for specifying the file-alteration detection data is changed. Hence, even if an abnormal operation such as power off is caused while they are being updated, the consistency of data can be maintained, thus normally detecting an alteration to the file.

Moreover, in the above described file management apparatus, preferably, the data creating means should create the volume-alteration detection data which includes the whole or a part of: generation management information on all or some files which are included in the volume; an error check code of all or some files which are included in the volume; a remaining recording capacity of the volume; the whole or a part of the volume management data of the volume; and information which is inherent in a recording medium where the volume is recorded.

According to this configuration, by the data creating means, the volume-alteration detection data is created which includes the whole or a part of: generation management information on all or some files which are included in the volume; an error check code of all or some files which are included in the volume; a remaining recording capacity of the volume; the whole or a part of the volume management data of the volume; and information which is inherent in a recording medium where the volume is recorded. Therefore, the volume-alteration detection data which includes such information is compared with the volume management data. This helps certainly detect an alteration to the volume.

In addition, in the above described file management apparatus, preferably, the data creating means should create the file-alteration detection data which includes the whole or a part of : size information on the file; recording start-time information on the file; recording end-time information on the file; a encoding key of the file; information which indicates a path in an area where the file is recorded; a hash value of all or some pieces of data which are included in the file; and an error check code of all or some pieces of data which are included in the file.

According to this configuration, by the data creating means, the file-alteration detection data is created which includes the whole or a part of: size information on the file; recording start-time information on the file; recording end-time information on the file; a encoding key of the file; information which indicates a path in an area where the file is recorded; a hash value of all or some pieces of data which are included in the file; and an error check code of all or some pieces of data which are included in the file. Therefore, the file-alteration detection data which includes such information is compared with the file management data. This helps certainly detect an alteration to the file.

A file management method according to the present invention includes: a data creating step of creating volume-alteration detection data for detecting an alteration to the volume management data when a file is written; a first storing step of storing the file, and storing the volume management data for managing a volume which includes the file, in a first storing means; a second storing step of storing the volume-alteration detection data which is created in the data creating step, in a second storing means which is disposed in a position physically different from the first storing means; a data comparing step of reading the volume management data from the first storing means when the volume is mounted, reading the volume-alteration detection data from the second storing means, and comparing the volume management data and the volume-alteration detection data; and a mounting step of mounting the volume if a decision is made in the data comparing step that there is no alteration.

According to this configuration, in the data creating step, when a file is written, volume-alteration detection data for detecting an alteration to the volume management data is created. Then, in the first storing step, the file is stored, and the volume management data for managing a volume which includes the file is stored in a first storing means. Besides, in the second storing step, the volume-alteration detection data which is created in the data creating step is stored in a second storing means which is disposed in a position physically different from the first storing means. In the data comparing step, when the volume is mounted, the volume management data is read from the first storing means, the volume-alteration detection data is read from the second storing means, and the volume management data and the volume-alteration detection data which have been read out is compared. If a decision is made in the data comparing step that there is no alteration, the volume is mounted in the mounting step.

Therefore, using the volume-alteration detection data which is stored in the second storing means which is disposed in a position physically different from the first storing means, a decision is made whether or not the volume has been altered. Thereby, an alteration to the volume can be certainly detected, thus preventing the volume from being falsified.

A file management program according to the present invention allows a computer to function as: a first storing means for storing a file, and storing volume management data for managing a volume which includes the file; a data creating means for creating volume-alteration detection data for detecting an alteration to the volume management data when the file is written; a second storing means for storing the volume-alteration detection data which is created by the data creating means, the second storing means being disposed in a position physically different from the first storing means; a data comparing means for reading the volume management data from the first storing means when the volume is mounted, reading the volume-alteration detection data from the second storing means, and comparing the volume management data and the volume-alteration detection data; and a mounting means for mounting the volume if the data comparing means decides that there is no alteration.

According to this configuration, in the first storing means, a file is stored, and volume management data for managing a volume which includes the file is stored. Then, the data creating means creates volume-alteration detection data for detecting an alteration to the volume management data when the file is written. In the second storing means which is disposed in a position physically different from the first storing means, there is stored the volume-alteration detection data which is created by the data creating means. Then, the data comparing means reads the volume management data from the first storing means when the volume is mounted, reads the volume-alteration detection data from the second storing means, and compares the volume management data and the volume-alteration detection data. If the data comparing means decides that there is no alteration, the mounting means mounts the volume.

Therefore, using the volume-alteration detection data which is stored in the second storing means which is disposed in a position physically different from the first storing means, a decision is made whether or not the volume has been altered. Thereby, an alteration to the volume can be certainly detected, thus preventing the volume from being falsified.

A computer-readable recording medium in which a file management program is recorded according to the present invention allows a computer to function as: a first storing means for storing a file, and storing volume management data for managing a volume which includes the file; a data creating means for creating volume-alteration detection data for detecting an alteration to the volume management data when the file is written; a second storing means for storing the volume-alteration detection data which is created by the data creating means, the second storing means being disposed in a position physically different from the first storing means; a data comparing means for reading the volume management data from the first storing means when the volume is mounted, reading the volume-alteration detection data from the second storing means, and comparing the volume management data and the volume-alteration detection data; and a mounting means for mounting the volume if the data comparing means decides that there is no alteration.

According to this configuration, in the first storing means, a file is stored, and volume management data for managing a volume which includes the file is stored. Then, the data creating means creates volume-alteration detection data for detecting an alteration to the volume management data when the file is written. In the second storing means which is disposed in a position physically different from the first storing means, there is stored the volume-alteration detection data which is created by the data creating means. Then, the data comparing means reads the volume management data from the first storing means when the volume is mounted, reads the volume-alteration detection data from the second storing means, and compares the volume management data and the volume-alteration detection data. If the data comparing means decides that there is no alteration, the mounting means mounts the volume.

Therefore, using the volume-alteration detection data which is stored in the second storing means which is disposed in a position physically different from the first storing means, a decision is made whether or not the volume has been altered. Thereby, an alteration to the volume can be certainly detected, thus preventing the volume from being falsified.

### Industrial Applicability

According to the present invention, a file system which is independent of an application executes the management and update of a file. This helps lighten a processing load which is borne by an application, and also largely shorten the process of developing an application. Simultaneously, even if an abnormal situation such as power off is produced while a file system is executing a file-update processing, the file system's consistency can be maintained and secured.

Still further, without depending upon an application, unified copyright management, or alteration management for a part or the whole of a file, can also be executed. Hence, the present invention has such great advantages, and thus, its industrial applicability is extremely high.

## Claims

1. A file management apparatus, **characterized by** including:
a first storing means for storing a file, and storing volume management data for managing a volume which includes the file;
a data creating means for creating volume-alteration detection data for detecting an alteration to the volume management data when the file is written;
a second storing means for storing the volume-alteration detection data which is created by the data creating means, the second storing means being disposed in a position physically different from the first storing means;
a data comparing means for reading the volume management data from the first storing means when the volume is mounted, reading the volume-alteration detection data from the second storing means, and comparing the volume management data and the volume-alteration detection data; and
a mounting means for mounting the volume if the data comparing means decides that there is no alteration.

2. The file management apparatus according to claim 1,
**characterized in that**:
the first storing means further stores file management data for managing the file;
the data creating means further creates file-alteration detection data for detecting an alteration to the file management data when the file is written;
the second storing means further stores the file-alteration detection data which is created by the data creating means;
the data comparing means further reads the file management data from the first storing means when the file is opened, reads the file-alteration detection data from the second storing means, and compares the file management data and the file-alteration detection data; and
an opening means for opening the file, if the file data comparing means decides that there is no alteration, is further provided.

3. The file management apparatus according to claim 2, **characterized in that** the first storing means stores the file management data by relating the file management data to the file-alteration detection data.

4. A file management system according to claim 3, **characterized in that** the first storing means stores the file management data which includes data for specifying the file-alteration detection data.

5. The file management apparatus according to claim 4, **characterized in that** when the file-alteration detection data and the data for specifying the file-alteration detection data are updated, the data creating means creates new file-alteration detection data, and thereafter, changes the data for specifying the file-alteration detection data so that the new file-alteration detection data is specified.

6. The file management apparatus according to claim 5, **characterized in that**: when the file-alteration detection data and the data for specifying the file-alteration detection data are updated, the first storing means stores the data for specifying the file-alteration detection data before updated and the new file-alteration detection data; and the data creating means creates the new file-alteration detection data, thereafter, changes the data for specifying the file-alteration detection data so that the new file-alteration detection data is specified, and deletes the data for specifying the file-alteration detection data before updated which is stored in the first storing means.

7. The file management apparatus according to any of claims 1 to 6, **characterized in that** the data creating means creates the volume-alteration detection data which includes the whole or a part of: generation management information on all or some files which are included in the volume; an error check code of all or some files which are included in the volume; a remaining recording capacity of the volume; the whole or a part of the volume management data of the volume; and information which is inherent in a recording medium where the volume is recorded.

8. The file management apparatus according to any of claims 2 to 7, **characterized in that** the data creating means creates the file-alteration detection data which includes the whole or a part of : size information on the file; recording start-time information on the file; recording end-time information on the file; a encoding key of the file; information which indicates a path in an area where the file is recorded; a hash value of all or some pieces of data which are included in the file; and an error check code of all or some pieces of data which are included in the file.

9. A file management method, **characterized by** including:
a data creating step of creating volume-alteration detection data for detecting an alteration to the volume management data when a file is written;
a first storing step of storing the file, and storing the volume management data for managing a volume which includes the file, in a first storing means;
a second storing step of storing the volume-alteration detection data which is created in the data creating step, in a second storing means which is disposed in a position physically different from the first storing means;
a data comparing step of reading the volume management data from the first storing means when the volume is mounted, reading the volume-alteration detection data from the second storing means, and comparing the volume management data and the volume-alteration detection data; and
a mounting step of mounting the volume if a decision is made in the data comparing step that there is no alteration.

10. A file management program, **characterized by** allowing a computer to function as:
a first storing means for storing a file, and storing volume management data for managing a volume which includes the file;
a data creating means for creating volume-alteration detection data for detecting an alteration to the volume management data when the file is written;
a second storing means for storing the volume-alteration detection data which is created by the data creating means, the second storing means being disposed in a position physically different from the first storing means;
a data comparing means for reading the volume management data from the first storing means when the volume is mounted, reading the volume-alteration detection data from the second storing means, and comparing the volume management data and the volume-alteration detection data; and
a mounting means for mounting the volume if the data comparing means decides that there is no alteration.

11. A computer-readable recording medium in which a file management program is recorded, **characterized by** allowing a computer to function as:
a first storing means for storing a file, and storing volume management data for managing a volume which includes the file;
a data creating means for creating volume-alteration detection data for detecting an alteration to the volume management data when the file is written;
a second storing means for storing the volume-alteration detection data which is created by the data creating means, the second storing means being disposed in a position physically different from the first storing means;
a data comparing means for reading the volume management data from the first storing means when the volume is mounted, reading the volume-alteration detection data from the second storing means, and comparing the volume management data and the volume-alteration detection data; and
a mounting means for mounting the volume if the data comparing means decides that there is no alteration.
